# EUROPEAN PATENT APPLICATION

(11) **EP 4 447 296 A1**
(43) Date of publication of application: **16.10.2024**
(21) Application number: 23167261.9
(22) Date of filing: 11.04.2023
(51) Int. Cl.: H02K 15/00, H02K 15/03, H02K 7/18, B65D 85/68

(54) **SEPARATION SYSTEM AND METHOD FOR PROCESSING MAGNET ELEMENTS OF A WIND TURBINE GENERATOR COMPONENT**

(71) Applicant: Siemens Gamesa Renewable Energy A/S, 7330 Brande (DK)
(72) Inventor: Azar, Ziad, Sheffield, S10 4ED (GB); Gonzalez, Adolfo Garcia, 7400 Herning (DK)
(74) Representative: SGRE-Association

(57) **Abstract**

A separation system configured to process magnet elements (10) extracted from a wind turbine generator component is provided. Each magnet element (10) comprises at least one permanent magnet block (15) and an enclosure (11, 17) or support. The separation system (100) comprises a transport system (50) configured to transport a magnet element (10) to a separation device (20), and the separation device (20) configured to separate the at least one permanent magnet block (15) from the enclosure (11, 17) or support of the magnet element (10). The separation system (100) is configured to receive and to process automatically and consecutively plural magnet elements (10).

## Description

### FIELD OF THE INVENTION

The present invention relates to a separation system configured to process magnet elements extracted form a wind turbine generator component, such as a generator rotor, and to a respective method.

### BACKGROUND

Over the past years, the size of wind turbines and their output power has been increasing significantly. Modern high power wind turbines include direct drive wind turbines in which the generator rotor is directly coupled to the wind turbine rotor without intervening gearbox. Such direct drive generators generally employ permanent magnets, usually on the generator rotor. For an exemplary wind turbine, six tons of NdFeB (neodymium iron boron) permanent magnets may be used on the generator rotor.

For mounting and for protecting respective permanent magnets, such magnets are often provided by an enclosure, which can include a base plate and a cover, or simply a support to which they are mounted. Mounting to the base plate or support may for example occur by means of an adhesive. Such enclosure that comprises a base plate may facilitate the handling of the permanent magnet and its mounting inside a generator component, such as on a rotor. For example, such base plate may be inserted into a mounting slot or may be fixed by fastening elements for mounting the magnet element to the generator component.

It is desirable to re-use permanent magnet material and in particular to recover such permanent magnet material at the end of life of respective wind turbine generators. It is in particular desirable to fast and efficiently collect permanent magnet material in order to provide an efficient recycling of the permanent magnet material.

### SUMMARY

Accordingly, there is a need to mitigate at least some of the drawbacks mentioned above and to provide an improved way of recycling permanent magnets of a wind turbine generator component.

This need is met by the features of the independent claims. The dependent claims describe embodiments of the invention.

According to an embodiment of the invention, a separation system configured to process magnet elements extracted from a wind turbine generator component is provided. Each magnet element comprises at least one permanent magnet block and an enclosure or support (such as a housing, a cover, a shell, an encapsulation, or the like). The separation system comprises a transport system configured to transport a magnet element to a separation device and the separation device which is configured to separate the at least one permanent magnet block from the enclosure or support of the magnet element. The separation system is configured to receive and to process automatically and consecutively plural magnet elements.

Such system may thus provide an efficient and safe separation of the magnet elements from their respective enclosure or support. In particular, as no human intervention may be necessary, the safety of service personnel operating such system may be improved. Furthermore, processing becomes possible at a large scale, since the system can automatically and quickly process a large amount of magnet elements. As the magnet elements are separated into their components, a recycling of both, the permanent magnet blocks as well as the constituents of the enclosure or support becomes feasible. An environmentally friendly separation of the main components in preparation for magnet recycling, and in particular a respective circular economy may thus be enabled. Such system may for example allow a processing of up to or even in excess of 100 magnet elements per hour. The system may thus provide the possibility of recycling different components of magnet elements from decommissioned generators, such as direct drive generators of wind turbines, at a large scale. Conventionally, such disassembly is not necessary, so that no methods of providing such efficient disassembly exist in the prior art.

The system may in particular automatically process the magnet elements by transporting a magnet element to the separation device and separating the permanent magnet block from the enclosure or support. The separation device may for example be configured to push out, cut open, push off, scrape off, disassemble, or perform any other necessary operations for separating the at least one permanent magnet block from the enclosure or support.

In an embodiment, the separation system comprises a holding device configured to hold the enclosure or support when operating the separation device. An effective separation of the permanent magnet block from the enclosure or support may thus be achieved. For example, a passive or active holding device may be provided. A passive holding device can for example be a recess, ridge, or other mechanical structure that fixes the enclosure or support in a direction in which force is applied by the separation device to provide the separation. An active holding device may for example include a clamp, vise, or the like, which may be pneumatically, hydraulically, or electrically operated. A simple and efficient fixation of the magnet element may thus be achieved.

Each magnet element may for example comprise an enclosure comprising a base plate and a cover, and the holding device may be configured to hold the base plate. The base plate may be thicker than the cover, so that by holding the base plate, a stable fixation is achieved, and the cover can be removed easily. The base plate may be a steel plate, and the cover may be made of sheet metal, e.g. steel sheet metal.

The separation device preferably comprises an actuator configured to push the at least one permanent magnet block and/or to push the enclosure or support during the separation. By such pushing operation, an efficient separation may be achieved.

The actuator may be configured to push the at least one permanent magnet block out of the enclosure of the magnet element. For example, the base plate may be held by the holding device, and the at least one permanent magnet block may be pushed by the actuator. This may occur without first opening the cover. The actuator may be configured to push the permanent magnet block so as to burst open the cover. A fast separation may thus be achieved.

The actuator may for example comprise a hydraulic cylinder, a pneumatic cylinder, or an electrical actuator. A hydraulic cylinder is preferred due to its simplicity and the forces it can apply.

The separation device may comprise a cutting device, in particular a blade, configured to cut the enclosure of the magnet element. Removal of the permanent magnet block from the enclosure may thereby be facilitated.

The enclosure may comprise a base plate and a cover, and the cutting device may be configured to separate the cover from the base plate. Besides facilitating removal of the permanent magnet block, such separation may further allow a separate recycling of the base plate and the cover.

The cutting device may for example be mounted to the actuator. The same actuator may accordingly perform the cutting operation and may push the enclosure and/or the permanent magnet block.

For example, the actuator may push the cover and/or the permanent magnet block while cutting the cover from the base plate. A pusher block may be mounted to the actuator that pushes both, the cover and the magnet block, together while cutting the cover from the base plate. The cutting device, in particular a blade, may be attached to such push block. When pushing both, the cover and the permanent magnet block, the permanent magnet block may be pushed out of the cover while the cover may be crunched together, as it is still attached to the base plate at some positions which have not yet been reached by the cutting device.

The separation by the separation device may thus be provided with a single actuator that may provide pushing and/or cutting. It should be clear that in other configurations, two or three actuators may be provided and may be configured to perform different separation operations. One actuator may for example comprise a cutting device and may cut the enclosure, and a further actuator may be configured to push the permanent magnet block and/or the enclosure. Likewise, it is also possible to push the base plate, or to provide separation by only cutting the cover from the base plate and using a different actuator, such as a robotic arm or suction, to remove the cover from the base plate. No pushing of either the cover, the base plate and/or the permanent magnet block may thus be required for performing the separation.

Likewise, it is possible to provide the separation without cutting, for example by using an actuator to push the permanent magnet block out of the enclosure, thereby bursting the enclosure. The permanent magnet block may thus be separated from the enclosure by a simple pushing operation. One or more pushing rods may for example penetrate the enclosure to push out the permanent magnet block. Accordingly, numerous possible implementations of the separation device are conceivable and can be used with embodiments of the present disclosure.

The separation system is preferably configured to process demagnetized magnet elements. Preferably, it is configured to process magnet elements that have been demagnetized by heat treatment. Processing demagnetized magnet elements significantly facilitates the handling of the magnet elements and of the permanent magnet blocks removed therefrom. Further, by processing heat-treated magnet elements, separation is further facilitated since any adhesive or other polymeric materials will generally have been burnt or evaporated during the heating process when performing demagnetization. The permanent magnet block will thus for example no longer adhere to the base plate to which it has been glued, so that the force required to provide separation of the permanent magnet block from the enclosure or support may be reduced. The separation system can thus be configured to operate at separation forces that are reduced compared to a separation of a magnet element that has not been demagnetized and that still comprises adhesive bonding between the enclosure and the permanent magnet block.

The transport system may comprise a conveyor configured to receive demagnetized magnet elements and to transport the demagnetized elements to the separation device, in particular to a holding device located at the separation device.

The separation system may further comprise an interface towards a demagnetization system, the interface being configured to receive demagnetized magnet elements from the demagnetization system after they have been demagnetized. These may for example be received by the above-mentioned conveyor. It should be clear that in some configurations, the same conveyor may run through the demagnetization system and the present separation system. The interface may thus be where the magnet element leaves the demagnetization system and enters the separation system via the same conveyor.

In an embodiment, the separation system further comprises a collection system configured to collect the at least one permanent magnet block separately from the enclosure or support. Further recycling of the individual components constituting the magnet elements may thus be facilitated. Such separate collection is optional, and the components may be collected together and sorted later at a recycling facility.

The collection system may comprise an active or passive transport device configured to transport the at least one permanent magnet block into a magnet block collection container after separation. A fast and automatic processing may thus be achieved, as the transport device may continuously remove separated permanent magnet blocks. An active transport device may for example include a hydraulic, pneumatic, or electric actuator that may push or pull the permanent magnet block into the respective container. A passive transport device may for example include a chute on which a permanent magnet block slides or falls into the magnet block collection container after separation.

The collection system may comprise an active or passive enclosure transport device configured to transport, after separation, at least part of the enclosure into an enclosure collection container. Such transport device may again have any of the above-mentioned configurations. The separated enclosure or enclosure part may thus be removed fast and efficiently from the separation system.

For example, the enclosure may comprise a base plate and a cover, and the separation system may be configured to separate the base plate from the cover, wherein the collection system is configured to separately collect the base plate and the cover. This may facilitate recycling of the separate components of the enclosure.

The enclosure transport device may comprise at least a first transport device configured to transport the cover after separation from the base plate into a cover collection container and a second transport device configured to transport the base plate after separation from the cover into a base plate collection container.

In an exemplary implementation, the second transport device may be provided by a conveyor of the transport system. The transport system may thus continue to transport the base plate after separation of the permanent magnet block and the cover into the base plate collection container.

The transport device for the permanent magnet block may for example be a passive device, such as a chute, and the first transport device for the separated cover may be an active transport device, such as an actuator that pushes or pulls the cover into the cover collection container. Other configurations are of course conceivable, such as both, the cover and the permanent magnet block being collected passively, or both being collected actively, or the permanent magnet block being actively pushed or pulled while the cover is collected passively.

In an embodiment, the separation system further comprises a holding device configured to hold at least part of the enclosure (in particular a cover of the enclosure) when the separation device separates the at least one permanent block from the enclosure. This holding device is preferably an active holding device, such as a pneumatic or hydraulic cylinder, an actively actuated clamp or the like. For example, when the actuator pushes both the cover and the permanent magnet block together and cuts the cover from the base plate, cover and permanent magnet block may become separated from the base plate, but may still cling together due to the deformation of the cover. Accordingly, by holding the cover and further pushing the permanent magnet block, such as by the above-mentioned actuator, the permanent magnet block may be separated efficiently from the cover. This is of course optional, since in other implementations of the separation device, no such separation of the permanent magnet block from the cover may be necessary (e.g., if the permanent magnet block is simply pushed out of the cover without separating the cover from the base plate).

In an embodiment, the separation system further comprises a shipping container. The transport system and the separation device may be disposed in the shipping container. The separation system may in particular be operable within the shipping container. The other elements of the separation system mentioned herein may as well be disposed in the shipping container. The shipping container may for example be a standard container, such as a 20, 24, or 40 foot container. It may in particular be an intermodal container, e.g. a container under ISO standard 668:2020 or comparable standard. The container may comprise a control room separated by an internal wall from a processing room in which the separation device is disposed. The control room may for example comprise a control system that controls the separation system. Service personnel operating the separation system may thus further be protected during operation, as they may control the system from the separate control room.

By providing such container, the separation system can be easily transported to the location at which the magnet elements are to be processed, such as to a port at which decommissioned wind turbine generators arrive from an offshore wind farm.

The separation system may be configured as a module, which is configured to interface a demagnetization system module that is configured to demagnetize magnet elements of a wind turbine generator component. By such modularization, an automated system that removes, demagnetizes, and separates magnet elements into their components can be provided, thus allowing re-use of the different materials of the magnet elements. In particular, recycling of the permanent magnet material may thus be facilitated significantly.

As the magnet element comprises an enclosure or support, the magnet element may also be designated as magnet module. Each magnet module may comprise one, two or more permanent magnet blocks.

The separation system may comprise a control system configured to control the transport system and the separation device. The control system may further control the collection system, in particular actuators of the collection system, if such are provided. The control system may be configured to control the separation system so as to perform any of the methods described herein. The control system may comprise respective control instructions stored on a volatile or non-volatile memory thereof and executable by a processing unit of the separation system.

According to a further embodiment of the invention, a method of processing magnet elements extracted from a wind turbine generator component is provided. Each magnet element comprises at least one permanent magnet block and an enclosure or support. The method comprises (a) transporting, by a transport system, a magnet element to a separation device; and (b) separating, by the separation device, the at least one permanent magnet block from the enclosure or support of the magnet element. The plural magnet elements are received and are automatically and consecutively processed by steps (a) and (b). By such method, advantages similar to the ones outlined further above may be achieved.

It should be clear that the method may comprise any of the steps described herein with respect to the separation system and its embodiments and examples. For example, the method may further comprise (c) collecting, by a collection system, the permanent magnet block separately from the enclosure or support. Steps (a) to (c) may then automatically and consecutively be repeated.

The step of separating may in particular comprise pushing the at least one permanent magnet block out of the enclosure and/or cutting the enclosure, in particular by cutting a cover from a base plate of the enclosure.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a separation system according to an embodiment.
Fig. 2 is a schematic drawing illustrating a magnet element according to an embodiment.
Fig. 3 is a schematic drawing illustrating a separation system according to an embodiment.
Fig. 4 is a schematic drawing showing details of the separation system of figure 3.
Fig. 5 is a schematic drawing showing further details of the separation system of figure 3.
Fig. 6 is a schematic drawing showing the pushing out of permanent magnet blocks from an enclosure of a magnet element in an actual separation device according to an embodiment.
Fig. 7 is a flow diagram illustrating a method of processing magnet elements according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

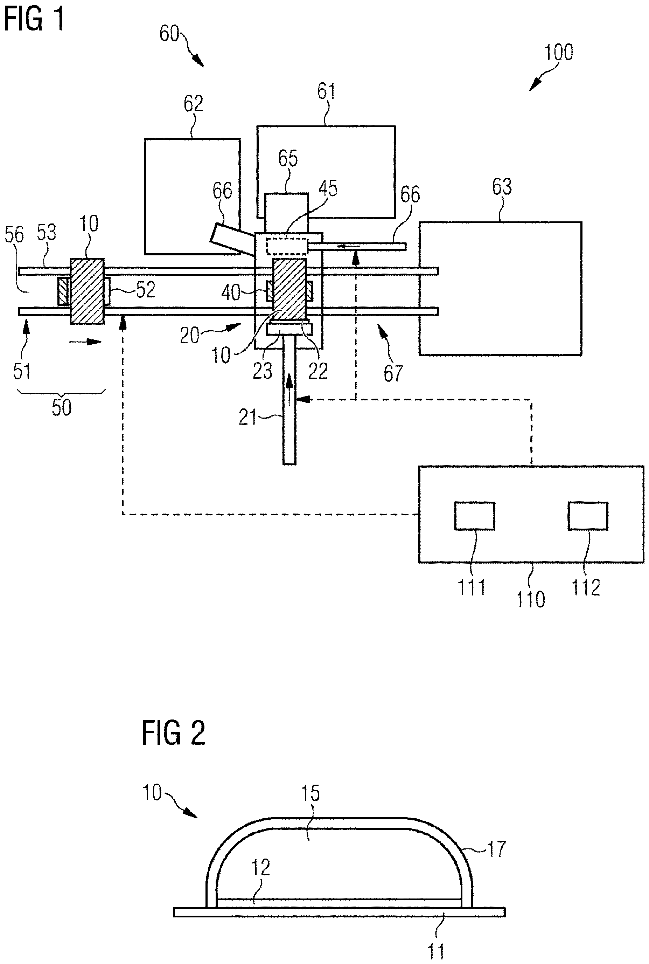

Fig. 1 schematically illustrates a separation system 100 according to an embodiment. Separation system 100 receives magnet elements 10 at an interface 56 towards a demagnetization system. Fig. 2 schematically illustrates an exemplary magnet element 10. In the cross-sectional view of Fig. 2, the magnet element 10 includes a base plate 11 on which one or more permanent magnet blocks 15 are provided. Permanent magnet blocks 15 are encapsulated by a cover 17 that is attached to the base plate 11. The one or more permanent magnet blocks 15 may be fixed to the base plate 11 and/or the cover 17 by means of adhesive 12. Magnet element 10 may thus also be designated as a magnet module. In other implementations, the magnet element 10 may for example only comprise a support in form of a base plate 11 to which one or more permanent magnet blocks 15 are mounted, e.g. by adhesive 12, or may comprise any other type of enclosure or support.

The permanent magnet block 15 may have been demagnetized by heat treatment or other type of treatment in a demagnetization system. Such heat treatment may have burnt or gasified the adhesive 12, so that the one or more permanent magnet blocks 15 may only loosely be bound to the base plate 11 and/or the cover 17. In other implementations, no such heat treatment may have occurred, and the permanent magnet blocks 15 may still be magnetized and/or the adhesive 12 may still be functional.

Turning back to Fig. 1, the separation system 100 comprises a separation device 20 for separating the one or more permanent magnet blocks 15 from the enclosure or support, and a transport system 50 for transporting the magnet element 10 to the separation device 20. Separation system 100 may further comprise a collection system 60 for collecting the components of the magnet element 10 together or separately.

The transport system 50 includes in the present embodiment a conveyor 51 with carriers 52 that receive and transport the magnet elements 10. The conveyor may comprise guide rails 53 that may guide the carrier 52 and/or the magnet element 10. A belt or chain may for example drive the carrier 52, wherein the conveyor 51 may comprise plural such carriers 52 to continuously transport magnet elements from the receiving interface 56 to the separation device 20. Operation of the transport system 50 may occur under control of a control system 110 of the separation system 100. Transport system 50 may for example be controlled so as to transport a magnet element 10 to the separation device 20 where it is deposited, and to then wait until operation of separation device 20 has finished before transporting and depositing the next magnet element 10 at the separation device 20.

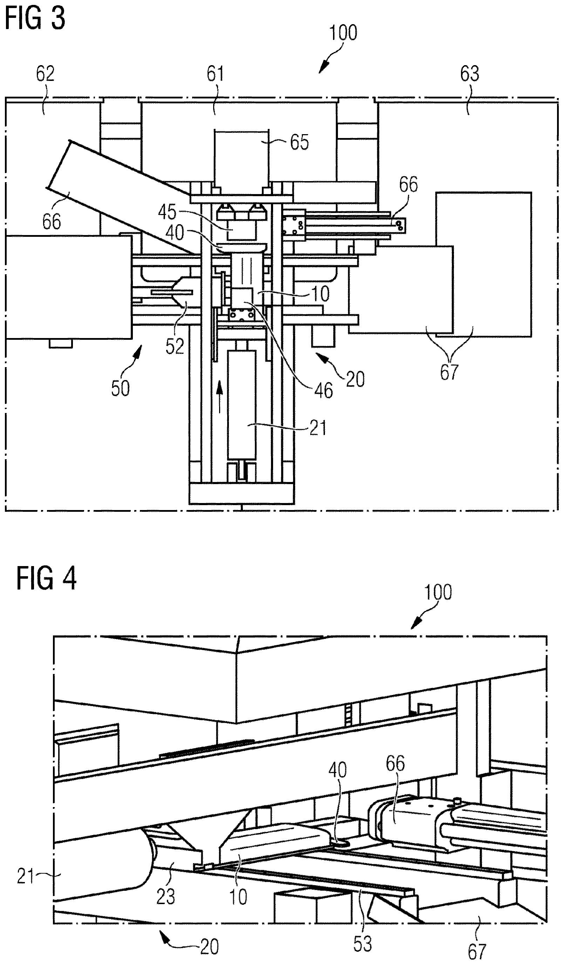

The separation system 100 further includes a holding device 40 configured to hold the enclosure or support of the magnet element during operation of the separation device 20. In the present example, holding device 40 is depicted as a clamp that holds the base plate 11 from the side, although other configurations are conceivable. In a preferred implementation of holding device 40, the holding device is passive and comprises a recess, ridge, or protrusion that blocks movement of at least part of the enclosure or support, in particular of the base plate 11, in a separation direction, for example in a direction in which an actuator 21 of separation device 20 is operable. Such implementation of the holding device is for example illustrated in Figs. 3 and 4. Other implementations, such as a hydraulically, pneumatically, or electrically driven clamp or vise or the like are likewise conceivable.

The transport system 50 may for example be operated by control system 110 to deposit the magnet element 10 at a predetermined location in separation device 20, as illustrated in Fig. 1, and to then retract the carrier 52. In this position, a passive holding device 40 may already support the magnet element in the separation direction, or control system 110 may activate a respective active holding device 40.

In the exemplary implementation of Fig. 1, the separation device 20 includes an actuator 21, to which a cutting device 22 and a push block 23 are mounted. Base plate 11 is supported by holding device 40 in the actuation direction of actuator 21, which is indicated by an arrow. Upon operation of the separation device 20, actuator 21 pushes the cutting device 22, such as a blade protruding in the actuation direction, and the push block 23 in the direction indicated by the arrow. Pushing the blade cuts the cover 17 from the base plate 11 and thus provides separation between these two components. The push block 23 further pushes the at least one permanent magnet block 15. Actuator 21 is preferably configured to provide a pushing force strong enough so that the at least one permanent magnet block 15 penetrates the cover 17, e.g. by bursting open the cover 17, so that the pushing action causes the at least one permanent magnet block 15 to leave the cover 17 in direction of the arrow. As part of the cover 17 is still attached to base plate 11, the pushing action will result in a crunching together of the cover 17. The cutting device may for example be a sharp piece of hardened steel.

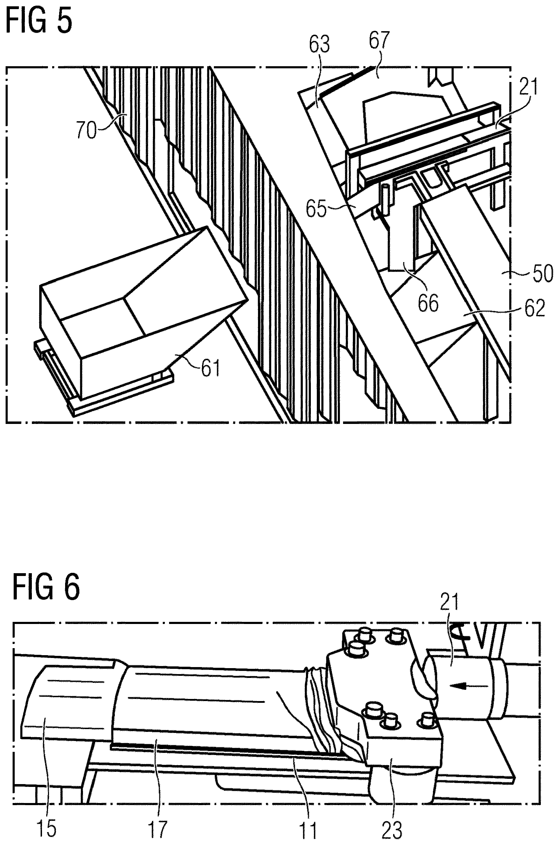

This is schematically illustrated in Fig. 6. As can be seen, the actuator 21 has pushed the push block 23 forward, on the forward end of which the cutting device 22 is provided (not visible in Fig. 6). Cover 17 has been cut from base plate 11 and push block 23 has crunched the cover 17. Push block 23 has furthermore pushed permanent magnet blocks 15 out of the rear part of the cover 17, whereby the rear part of cover 17 has been burst open.

Due to the crunching of cover 17, the crunched cover 17 may cling to the last permanent magnet element leaving the cover, when the cover 17 is fully separated from base plate 11. To provide a final separation between the at least one permanent magnet block 15 and cover 17, a second holding device 45 (figs. 1 and 3) may be provided. Holding device 45 may for example comprise a pneumatic or hydraulic cylinder that engages the crunched cover 17 to hold it in place. For example, such cylinder may lower a respective engagement member from above onto the crunched cover 17. While cover 17 is being held in place by the second holding device 45, the actuator 21 may again be actuated to further push by means of push block 23 or the attached cutting device the last permanent magnet block 15 out of the crunched cover 17. Since the distance by which the push block 23 is advanced by the actuator 21 may not be sufficient for a complete separation, an extender 46 (e.g., a block of steel) may be provided to extend the push block. The separation system may comprise a further actuator, e.g. a pneumatic cylinder, that lowers the extender 46 after the push block 23 has been retracted by actuator 21. The extender 46 may thus be placed between the push block 23 and the magnet element and may thereby extend the push block 23. The actuator 21 may then again be operated to fully push the last magnet block 15 out of the crunched cover 17 by means of the extender 46. Such extender ensures that the pushing distance is sufficient to provide full separation. Accordingly, by such actuation of actuator 21 and optionally by providing the extender 46, a complete separation between the base plate 11, the cover 17 and the at least one permanent magnet block 15 may thus be achieved.

Operation of the actuator 21 and of the second holding device 45, which in the present example is an active holding device, may again occur under control of control system 110.

Separated components of the magnet element 10 may be collected by means of a collection system 60. A first transport device 65 transports the separated permanent magnet block(s) 15 into a permanent magnet block collection container 61. Transport device 65 may be passive, such as a chute (present example) or a simple hole through which separated permanent magnet blocks can fall, or may be an active device that pushes or pulls the permanent magnet blocks into container 61.

A second transport device 66 is configured to transport the separated cover 17 into a cover collection container 62. In the present example, transport device 66 comprises as a passive component a chute and as an active component a pneumatic or hydraulic cylinder 66 that pushes the separated cover 17 onto the cute, as indicated by the arrow in Fig. 1. Collection system 60 may further comprise a third transport device 67 which in the present example is provided by a rear part of the conveyor 51. Transport device 67 transports the separated base plate into the base plate collection container 63. Control system 110 may for example drive the carrier 52 so as to transport the base plate into collection container 63. Collection system 60 may comprise the three collection containers 61, 62 and 63 and the three transport devices 65, 66, and 67. It should be clear that in other implementations, the separated components may be collected in the same container, or separated components may be collected by a further conveyor that transports for example a separated permanent magnet element directly to further recycling processing. Collection system 60 may thus be implemented in many different ways.

It should be clear that Fig. 1 only illustrates an exemplary implementation of the separation system 100 and that many modifications are conceivable and within the scope of the present disclosure. Separation device 20 may for example comprise different actuators performing a disassembly of magnet elements 10 in a different manner. It may for example comprise a first actuator that cuts the cover 17 from base plate 11, a second actuator that lifts off the cut cover 17 from the base plate 11, and a third actuator that pushes the at least one permanent magnet block 15 from the base plate 11. Also, the separation may be performed in a different sequence, for example by first removing the base plate 11, and only thereafter separating the permanent magnet block 15 from cover 17.

Also, it should be clear that the particular implementation of the separation device 20 depends on the configuration of the enclosure or support of the magnet element 10. For example, if cover 17 is screwed to the base plate 11, separation device 20 may include an actuator configured to remove such screws for disassembling cover 17 from base plate 11. As another example, if magnet element 10 includes a cover 17 that completely encapsulates the permanent magnet block 15 without base plate 11, separation device 20 may include an actuator that cuts open the cover 17 and a further actuator that removes the permanent magnet block 15 from the cover 17. In other implementations, a respectively adapted holding device 40 may hold such cover 17, and a configuration of the separation device 20 similar to the one explained with respect to Fig. 1 may at the same time cut the cover and push out the permanent magnet block 15 from the cover 17. Accordingly, many different implementations of separation device 20 are conceivable in dependence on the configuration of the magnet element 10.

Cutting device 22 is optional. For example, instead of pushing block 23, separate pushing elements may be provided that penetrate cover 17 and that push out the permanent magnet block(s) from the cover 17, e.g. by bursting open the cover 17 at its rear end. Permanent magnet blocks 15 may thus be pushed out of the enclosure without a respective separation of cover 17 from base plate 11.

Respective modifications are likewise conceivable for the collection system 60. For example, an active transport device with a pneumatic or hydraulic piston may be used for collecting the permanent magnet blocks 15, or a passive transport system may be used for collecting covers 17. Further, covers 17 and base plate 11 may be collected together, e.g. using a transport device similar to 65 or 66.

It should further be clear that transport system 50 may use any conveyor known in the art, such as any of the available conveyors, including belt, chain, slat or other conveyors, or any other known transport device.

Separation system 100 is configured to automatically and consecutively process plural magnet elements 10. In particular, a magnet element 10 is received (e.g. at interface 56) and automatically transported to the separation device 20. Separation then occurs automatically as describes above. The separated components of the magnet element 10 are then automatically collected by collection system 60. The transport system 50 then automatically places the next magnet element 10 at the separation device 20, thus resulting in an automated and continuous processing of magnet elements 10. Recycling of magnet elements from a wind turbine generator component, in particular a generator rotor, may thus occur with high throughput. As no human intervention is necessary, safety for service personnel is further increased.

Operation may occur under control of the control system 110. Control system 110 may comprise a processing unit 111 and a memory 112. Memory 112 may comprise control instructions that are executed by processing unit 111. By executing the instructions by processing unit 111, the control system 110 may cause the separation system 100 to perform any of the methods described herein. Processing unit 111 may include a microprocessor, an application specific integrated circuit, a digital signal processor, or the like. Memory 112 may include any type of volatile and non-volatile memory, such as R_AM, ROM, Flash-Memory, or the like. Control system 110 may comprise any other elements common to a computing system, such as respective input and output interfaces for receiving information and sending control signals, as well as a user interface.

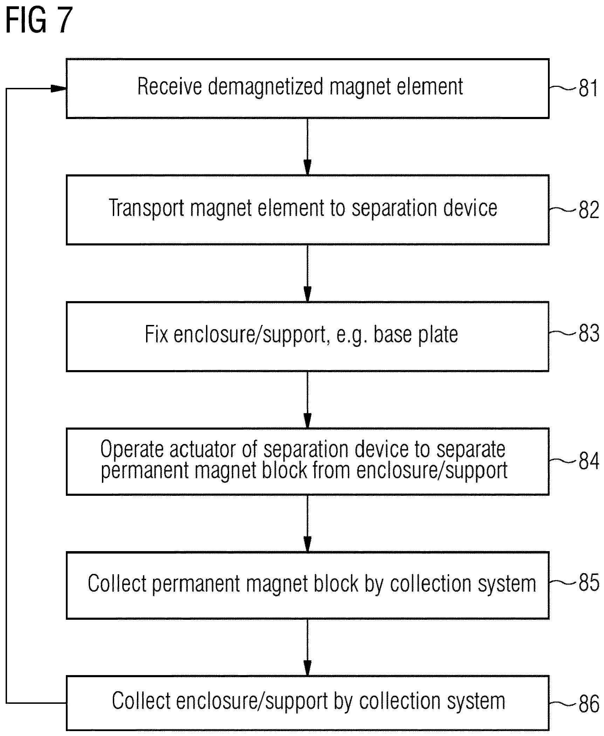

Fig. 7 illustrates a method that may be performed by separation system 100 under control of control system 110. In step 81, a demagnetized magnet element 10 is received, e.g. at interface 56. The magnet element 10 is transported to the separation device 20 in step 82, in particular via transport system 50. In step 83, the enclosure or support of the magnet element 10 is fixed, preferably by holding device 40. This can occur passively by placing magnet element 10 at a respective position via transport system 50, or by actively engaging the holding device 40. In particular, the base plate 11 of the magnet element is fixed in the separation direction of separation device 20.

In step 84, the actuator 21 of the separation device 20 is operated to separate at least the permanent magnet block 15 from the enclosure or support, e.g. by pushing permanent magnet block 15 from the base plate 11 and the cover 17. In step 85, the permanent magnet block 15 is collected by the collection system 60, e.g. by an active or passive transport device that forwards the permanent magnet block into a collection container 61, or to a further recycling processing stage.

In step 86, the enclosure and/or support is collected by collection system 60. This may occur by a separate collection of base plate 11 and cover 17, as explained with respect to Fig. 1, but may also occur by collecting such components together. The method may then return to step 81 for processing and in particular separating the next magnet element. It should be clear that the processing steps of different magnet elements may partly overlap, for example the next magnet element may already be received by the transport system while another magnet element is still being processed by separation device 20. A higher throughput may thus be achieved.

Figs. 3 to 5 illustrate a particular implementation of the separation system 100 of Fig. 1. The above explanations thus equally apply to the embodiment of Figs. 3 to 5.

In Fig. 3, the transport system 50 likewise includes carriages 52, wherein Fig. 3 illustrates a carriage 52 after it has unloaded a magnet element 10 in the separation device 20. Holding device 40 is implemented as a holding plate or ridge against which the base plate 11 rests and is thus fixed in the separation direction indicated by the arrow. Actuator 21 is implemented as a hydraulic piston provided with a push block 23 and blade 22 to separate the components of magnet element 10 in the above-described manner. Second holding device 45 is implemented as a pneumatic cylinder that pushes in a direction perpendicular to the drawing plane to fix the crunched cover while the permanent magnet block is being separated there from. Furthermore, the second transport device 66 is likewise implemented as a pneumatic cylinder that pushes the separated cover 17 onto the chute which transports it into the cover collection container 62. Transport device 67 further comprises chutes that allow the separated base plate 11 to drop into collection container 63.

Fig. 4 is a perspective view that shows in more detail the positioning of magnet element 10 in the separation device 20. Magnet element 10 rests on guide rails 53 of the transport system and is being held in separation direction by holding device 40 implemented as a plate or protrusion that restricts movement of base plate 11 in the separation direction. A pusher is further mounted to the end of the pneumatic cylinder of transport device 66 for pushing the separated cover towards the cover collection container 62. Fig. 4 further illustrates the chute forming part of the third transport device 67 that takes up the base plate once it falls off the guide rails 53.

Separation system 100 preferably comprises a shipping container 70, as illustrated in the perspective view of Fig. 5. The shipping container 70 is preferably a standard container, such as a 20, 24 or 40 foot container. The separation system is thus easily transportable to the location, e.g. the port, at which the magnet elements of the generator component are to be processed. Shipping container 70 may comprise respective openings through which the collection containers 61 to 63 may be taken out. The shipping container may further comprise a control room that is separated by an internal wall from the separation device 20, the transport system 50 and the collection system 60. Safety for the service personnel operating the separation system 100 may thus be improved. Such control room may further comprise the control system 110 that controls the components of system 100.

The separation system 100 is further preferably a modular system and provided as a respective module. This module may interface a demagnetization module that in a similar way automatically processes magnet elements for demagnetization. The interfacing between the modules may occur via the interface 56.

The system 100 may thus comprise hydraulic and pneumatic actuators that allow the extraction and separation of the main components of the magnet elements 10. By such transport system and automatic separation, the processing of magnet elements can be accelerated, and up to or even in excess of 100 magnet modules may be processed and in particular separated into their components per hour.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A separation system configured to process magnet elements (10) extracted from a wind turbine generator component, wherein each magnet element (10) comprises at least one permanent magnet block (15) and an enclosure (11, 17) or support, wherein the separation system (100) comprises:
- a transport system (50) configured to transport a magnet element (10) to a separation device (20); and
- the separation device (20) configured to separate the at least one permanent magnet block (15) from the enclosure (11, 17) or support of the magnet element (10),
wherein the separation system (100) is configured to receive and to automatically and consecutively process plural magnet elements (10).

2. The separation system according to claim 1, wherein the separation system comprises a holding device (40) configured to hold the enclosure (11, 17) or support when operating the separation device (20).

3. The separation system according to claim 1 or 2, wherein each magnet element (10) comprises an enclosure comprising a base plate (11) and a cover (17), wherein the holding device (40) is configured to hold the base plate (11).

4. The separation system according to any of the preceding claims, wherein the separation device (20) comprises an actuator (21) configured to push the at least one permanent magnet block (15) and/or to push the enclosure (11, 17) or support during the separation.

5. The separation system according to claim 4, wherein the actuator (21) is configured to push the at least one permanent magnet block (15) out of the enclosure (11, 17) of the magnet element (10).

6. The separation system according to claim 4 or 5, wherein the actuator (21) comprises a hydraulic cylinder, a pneumatic cylinder, or an electrical actuator.

7. The separation system according to any of the preceding claims, wherein the separation device (20) comprises a cutting device (22), in particular a blade, configured to cut the enclosure (11, 17) of the magnet element (10).

8. The separation system according to claim 7, wherein the enclosure comprises a base plate (11) and a cover (17), wherein the cutting device (22) is configured to separate the cover (17) from the base plate (11).

9. The separation system according to claim 4, 5, or 6 and according to claim 7 or 8, wherein the cutting device (22) is mounted to the actuator (21).

10. The separation system according to any of the preceding claims, wherein the transport system (50) comprises a conveyor (51) configured to receive demagnetized magnet elements and to transport the demagnetized magnet elements to the separation device (20), in particular to a holding device (40) located at the separation device (20).

11. The separation system according to any of the preceding claims, further comprising an interface (56) towards a demagnetization system, the interface (56) being configured to receive demagnetized magnet elements (10) from the demagnetization system after they have been demagnetized.

12. The separation system according to any of the preceding claims, further comprising a collection system (60) configured to collect the at least one permanent magnet block (15) separately from the enclosure (11, 17) or support.

13. The separation system according to claim 12, wherein the collection system (60) comprises an active or passive transport device (65) configured to transport the at least one permanent magnet block (15) into a magnet block collection container (61) after separation.

14. The separation system according to claim 12 or 13, wherein the collection system (60) comprises an active or passive enclosure transport device (66, 67) configured to transport after separation at least part of the enclosure (11, 17) into an enclosure collection container (62, 63).

15. A method of processing magnet elements (10) extracted from a wind turbine generator component, wherein each magnet element (10) comprises at least one permanent magnet block (15) and an enclosure or support (11, 17), wherein the method comprises:
- (a) transporting, by a transport system (50), a magnet element (10) to a separation device (20); and
- (b) separating, by the separation device (20), the at least one permanent magnet block (10) from the enclosure (11, 17) or support of the magnet element (10),
wherein plural magnet elements (10) are received and are automatically and consecutively processed by steps (a) and (b).
